# DEMANDE DE BREVET EUROPEEN

(11) **EP 2 065 290 A1**
(43) Date de publication de la demande: **03.06.2009**
(21) Numéro de dépôt: 08165529.2
(22) Date de dépôt: 30.09.2008
(51) Int. Cl.: B62D 1/06, B60H 3/00, B60H 1/00

(54) **Diffuseur pour délivrer un débit d'air par l'intermédiaire d'un volant de conduite**

(30) Priorité: 28.11.2007 FR 0759399
(71) Demandeur: PEUGEOT CITROËN AUTOMOBILES S.A., 78140 Vélizy Villacoublay (FR)
(72) Inventeur: Appasamy, Jean-Michel, 78760 Jouars Ponchartrain (FR); Jeuffe, Gérard, 78580 Bazemont (FR)

(57) **Abrégé**

Diffuseur pour délivrer de façon différenciée un débit d'air additionnel dans l'habitacle d'un véhicule par son volant (1), comportant un distributeur (2) et une canalisation de liaison entre un ensemble de climatisation de l'intérieur de l'habitacle, cette canalisation prélevant le débit d'air additionnel pour l'admettre dans le distributeur avant qu'il ne soit repris par un tube de renvoi (9) et délivré dans une zone creuse ménagée à l'intérieur du volant puis évacué hors de celle-ci par des orifices ménagés dans le cercle (11) de ce volant, caractérisé en ce que les orifices de sortie sont individualisés, une partie (12a) de ces orifices étant réservée à la délivrance d'air pur provenant de l'ensemble de climatisation via un mélangeur réglable et l'autre partie (12b) à la délivrance d'air parfumé via ce mélangeur et une réserve de parfum (18), ces orifices (12a,12b) étant en communication avec deux parties indépendantes et séparées (10a,10b) de la zone creuse, alimentées par deux conduits de raccordement distincts (17,23) respectivement.

## Description

La présente invention est relative à un dispositif permettant de diffuser à l'intérieur de l'habitacle d'un véhicule automobile un courant d'air additionnel, froid ou chaud, à température régulée, provenant de l'ensemble de climatisation dont est usuellement équipé ce véhicule afin de délivrer un débit principal convenablement réparti dans cet habitacle, en ajoutant, le cas échéant, à une fraction de ce courant d'air additionnel un parfum d'ambiance, la diffusion s'effectuant par l'intermédiaire du volant du véhicule.

La manoeuvre d'un véhicule automobile par commande de son volant de direction, notamment en cas de chaleurs extérieures élevées ou dans des climats relativement humides peut, dans ces conditions ambiantes particulières et/ou pour certains conducteurs, provoquer une transpiration notable de leurs mains qui tiennent le volant pour diriger le véhicule, ce qui est désagréable et peut faire glisser intempestivement ce volant, qui risque ainsi de pivoter de façon non souhaitée. En période hivernale, le contact des mains avec le volant peut également produire une sensation de froid, peu confortable.

L'invention vise à pallier ces inconvénients grâce à un diffuseur d'air relié au circuit de climatisation du véhicule qui assure la fourniture dans l'habitacle d'air de chauffage ou de refroidissement selon le cas, en permettant qu'une partie de cet air soit dérivée jusque dans le volant du véhicule et renvoyée dans l'habitacle, notamment par une pluralité d'orifices de sortie prévus de préférence dans la périphérie de ce volant, tenu entre les mains du conducteur.

L'invention permet en outre d'ajouter au débit d'air additionnel ainsi délivré à travers le volant, un parfum d'ambiance selon une proportion qui est ajustable à volonté au moyen d'un organe de commande prévu sur ce volant et actionné à son gré par le conducteur.

A cet effet, le diffuseur considéré, pour délivrer de façon différenciée, un débit d'air additionnel dans l'habitacle d'un véhicule automobile par l'intermédiaire du volant de conduite de celui-ci, comportant un distributeur creux, de forme cylindrique, constitué d'une couronne circulaire fixe liée au fût entourant la colonne de direction de ce véhicule et d'une couronne mobile, montée libre en rotation sur cette couronne fixe et solidarisée du volant qui entraîne la colonne de direction, et une canalisation de liaison entre un ensemble de climatisation fournissant un débit d'air principal, chaud ou froid, à l'intérieur de l'habitacle, cette canalisation prélevant le débit d'air additionnel pour l'admettre dans le distributeur à travers la couronne fixe, ce débit d'air additionnel étant repris par un tube de renvoi, réuni au distributeur à travers la couronne mobile, l'air admis dans ce tube de renvoi étant délivré dans une zone creuse ménagée à l'intérieur du volant et évacué hors de celle-ci par une pluralité d'orifices de sortie vers l'extérieur, en liaison avec la zone creuse et de préférence régulièrement répartis dans le cercle de préhension qui forme la périphérie de ce volant, se caractérise en ce que les orifices de sortie sont individualisés, une partie de ces orifices étant réservée à la délivrance d'air pur provenant de l'ensemble de climatisation via un mélangeur réglable et l'autre partie à la délivrance d'air éventuellement parfumé via ce mélangeur et une réserve de parfum, ces orifices étant respectivement en communication avec deux parties indépendantes et séparées de la zone creuse, alimentées par deux conduits de raccordement distincts avec les sorties du mélangeur et de la réserve de parfum respectivement.

Avantageusement, l'ensemble de climatisation et la réserve de parfum sont reliés à travers un mélangeur réglable, apte à répartir le débit d'air additionnel délivré par le tube de renvoi, de telle sorte qu'une fraction variable et ajustable de ce débit traverse la réserve de parfum pour s'en imprégner avant admission dans le volant.

Dans un mode de réalisation préféré le mélangeur réglable comporte un bâti fixe, muni d'un orifice d'admission du débit d'air additionnel provenant de l'ensemble de climatisation par le tube de renvoi, un logement interne réuni par deux conduits de communication distincts respectivement avec l'entrée de la réserve de parfum et directement avec une des parties de la zone creuse du volant, un tube de by-pass monté entre le tube de renvoi et le conduit de raccordement relié à la sortie du mélangeur réglable, et un tiroir, coulissant à l'intérieur du logement interne, muni de perçages transversaux ou équivalents, dont la position avec la position du tiroir permet d'ouvrir ou de fermer de manière ajustable les deux conduits de communication pour la traversée de la réserve de parfum par la fraction variable du débit d'air additionnel à imprégner.

De préférence, le tiroir coulissant du mélangeur comporte, à l'extérieur du bâti fixe, un pion de manoeuvre, propre à permettre d'agir sur le déplacement de ce tiroir dans le logement interne et par suite sur la position de ses perçages transversaux en regard des conduits de communication.

Selon une autre caractéristique, le pion de manoeuvre coopère avec un levier formant came, monté pivotant par rapport au bâti fixe du mélangeur autour d'un axe de rotation excentré, la commande de position du levier provoquant le déplacement du pion et par suite du tiroir coulissant dans le logement interne du mélangeur.

Avantageusement, le levier formant came comporte un profil extérieur en forme de secteur circulaire autour de l'axe de rotation, de telle sorte qu'un effort tangentiel exercé sur ce profil permette de faire pivoter le levier autour de cet axe en provoquant le déplacement du tiroir coulissant dans le logement du mélangeur par l'intermédiaire du pion, libre de coulisser dans une fente allongée du levier.

Selon une caractéristique particulière, le profil extérieur en forme de secteur circulaire du levier formant came est strié pour constituer une molette de commande, apte à être actionnée dans un sens ou dans l'autre, par le doigt du conducteur.

Avantageusement, la molette de commande est logée dans une ouverture ménagée dans un bras diamétral réunissant la colonne de direction au cercle de préhension du volant.

D'autres caractéristiques d'un diffuseur différentiel d'air, éventuellement parfumé, à travers le volant d'un véhicule automobile, apparaîtront encore à travers la description qui suit d'un exemple de réalisation, donné à titre indicatif et non limitatif, en référence aux dessins annexés sur lesquels :
- La Figure 1 est une vue schématique en perspective, illustrant le distributeur cylindrique relié respectivement au volant de conduite et à l'ensemble de climatisation d'un véhicule.
- La Figure 2 représente schématiquement le tube de renvoi du débit d'air additionnel provenant du distributeur, et ses éléments de raccordement, avec le mélangeur réglable et la réserve de parfum.
- La Figure 3 est une vue en élévation et en coupe, à plus grande échelle, du mélangeur d'air avec son tiroir coulissant, son levier de commande, la réserve de parfum et les diverses liaisons établies entre ces éléments.
- Les Figures 4a à 4c sont des schémas du mélangeur réglable, permettant d'expliciter la manière dont il est mis en oeuvre avec le diffuseur d'air selon l'invention.
- La Figure 5 est une vue en plan, à plus grande échelle, du volant du véhicule, illustrant notamment le positionnement de la molette de commande du mélangeur réglable sur le bras du volant et la répartition différenciée des orifices de sortie du débit d'air dans le cercle de préhension de ce volant.

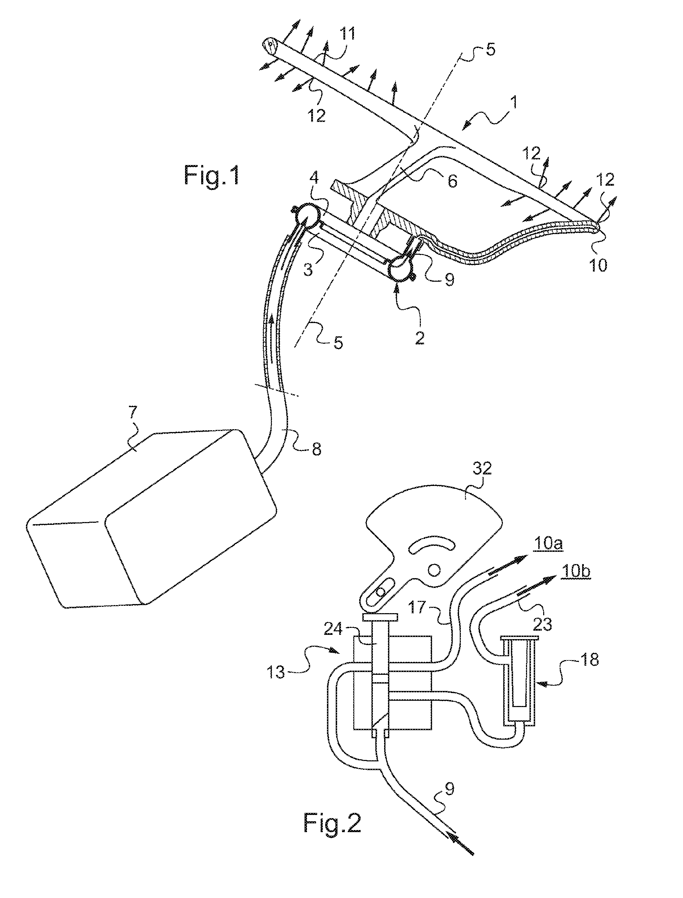

Sur la Figure 1, la référence 1 désigne le volant de direction d'un véhicule automobile, ce volant étant associé à un distributeur d'air 2, creux, de forme générale cylindrique, formé d'une couronne circulaire fixe 3 et d'une couronne mobile 4, également circulaire et emboîtée à coulissement rotatif sur la couronne fixe, celle-ci étant notamment liée à un élément tubulaire (non représenté) qui constitue le fût entourant la colonne de direction par laquelle le volant 1 transmet ses mouvements de rotation aux roues du véhicule, cette colonne et ses organes de transmission, en eux-mêmes classiques dans la technique et dont le détail n'importe pas à l'invention de sorte qu'il n'est pas nécessaire de décrire ici, étant simplement schématisés sur le dessin par un axe 5, représenté sous la forme d'une ligne pointillée qui s'étend dans une direction sensiblement perpendiculaire au plan dans lequel se situe le volant 1.

La couronne mobile 4 est reliée au volant 1 par une pièce de liaison 6 et tourne librement avec celui-ci sur la couronne fixe 3 autour de l'axe 5, des moyens d'étanchéité (non représentés) étant prévus entre ces deux couronnes pour isoler le distributeur 2 qui, dans l'exemple considéré, épouse sensiblement la forme d'un tore, et permettre que l'air qu'il contient ne s'échappe vers l'extérieur de ce distributeur, lors du déplacement relatif de la couronne mobile entraînée par le volant vis-à-vis de la couronne fixe.

La référence 7 désigne par ailleurs un ensemble de climatisation, apte à délivrer dans l'habitacle du véhicule, généralement avec l'aide d'un ventilateur réglable, un débit principal d'air, soit réchauffé, notamment lorsqu'il est prélevé dans le circuit de refroidissement du moteur au moyen des calories provenant du radiateur du véhicule, soit refroidi par les frigories produites par un système de réfrigération approprié, la température de l'air chaud ou froid et la valeur du débit d'air fourni dans l'habitacle étant ajustables au gré de l'utilisateur.

Cet ensemble de climatisation 7 est agencé pour permettre de prélever à partir de celui-ci un débit d'air additionnel au moyen d'une canalisation de liaison 8, dont une extrémité se raccorde à cet ensemble et dont l'autre débouche dans le distributeur 2, à travers la couronne fixe 3 de celui-ci, ce débit d'air additionnel étant repris à travers la couronne mobile 4 par un tube de renvoi 9 qui l'achemine dans une zone creuse 10, ménagée à l'intérieur du volant 1 en particulier dans le cercle de préhension 11 de celui-ci que le conducteur serre entre ses mains pour imposer à la colonne de direction 5 les mouvements de rotation nécessaires à la conduite du véhicule, cette zone creuse 10 comportant une pluralité d'orifices de sortie de l'air 12 prévus dans le cercle 11 et disposés ainsi au contact ou dans le voisinage immédiat de ces mains, pour en assurer, selon le cas, le réchauffement ou le refroidissement en fonction de la température de cet air et du réglage choisi pour l'ensemble de climatisation.

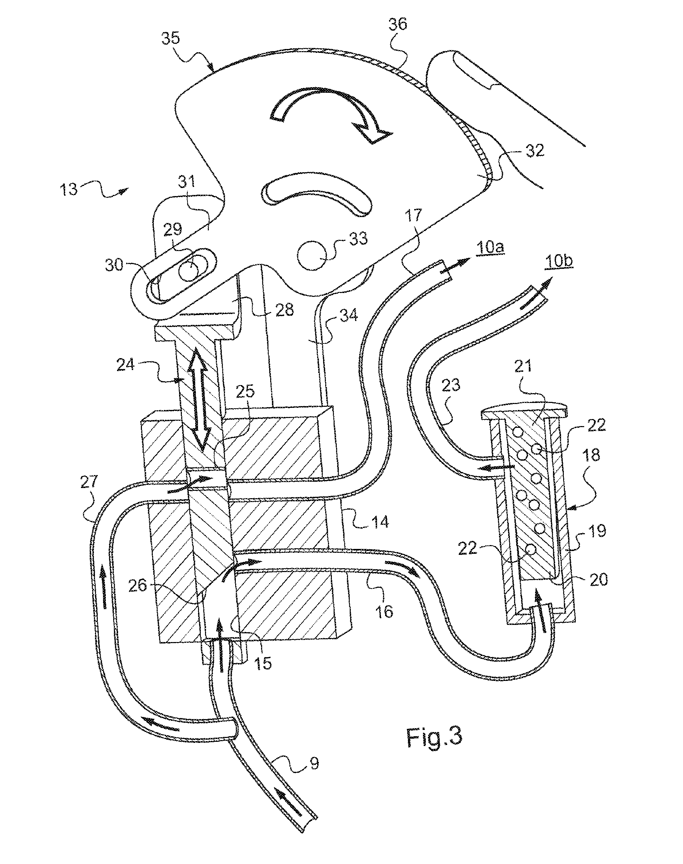

Conformément à l'invention et comme schématiquement représenté sur la Figure 2, le tube de renvoi 9 est réuni à un mélangeur réglable 13 et une réserve de parfum 18, illustrés de manière succincte sur cette même Figure 2 mais dont les Figure 3 à 5, décrites par la suite, explicitent plus en détail la réalisation et la mise en oeuvre, les sorties du mélangeur et de la réserve de parfum étant séparément réunies par des conduits de communication 17 et 23 aux orifices prévus dans la zone creuse 10 du volant 1, aménagée pour différencier les débits d'air délivrés par les orifices de sortie 12 répartis dans le cercle 11 de celui-ci.

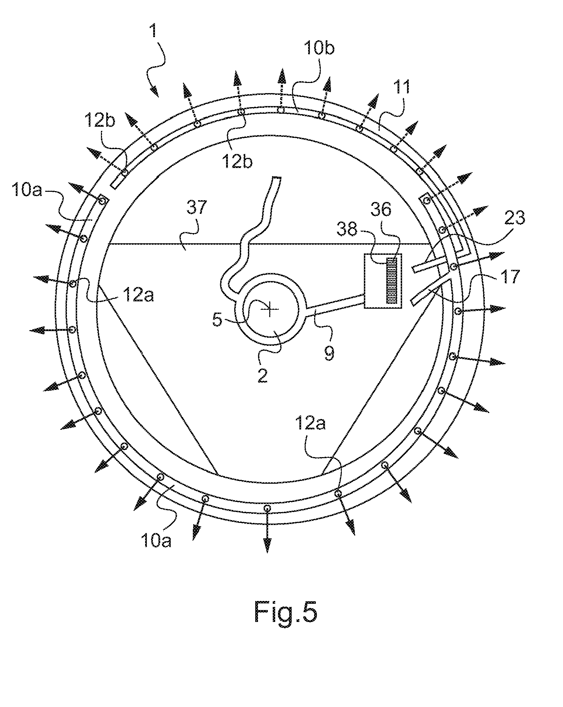

Notamment, ces orifices de sortie d'air 12 se répartissent dans cette zone, comme vu plus en détail sur la Figure 5, selon deux séries d'orifices 12a et 12b, ces orifices, individualisés, qui sont de préférence régulièrement répartis selon la périphérie de ce cercle, étant ménagés dans deux parties séparées et non communicantes 10a et 10b de la zone creuse 10, afin de permettre au débit d'air, admis respectivement dans chacune d'elles, par les conduits de raccordement 17 et 23, de s'échapper de façon indépendante hors du volant.

La Figure 3 illustre, à plus grande échelle, un mode de réalisation particulier du mélangeur réglable 13 et de la réserve de parfum d'ambiance 18 qui permet d'imprégner à volonté tout ou partie de la fraction du débit d'air additionnel provenant de l'ensemble de climatisation 7, acheminé vers le volant 1 par le tube de renvoi 9.

Le mélangeur 13, monté entre le distributeur 2 et le volant 1, comporte un boîtier 14, muni d'un logement interne 15 auquel se raccorde le tube de renvoi 9, ce logement, qui s'étend de préférence verticalement dans le boîtier, pouvant lui-même être mis en communication avec l'extrémité de deux conduits 16 et 17, superposés selon la hauteur du logement et respectivement réunis, à leur extrémité opposée, pour l'un à l'entrée de la réserve de parfum 18, extérieure au boîtier 15, et pour l'autre directement à la partie 10a de la zone creuse 10 du volant 1.

Cette réserve 18 se compose avantageusement d'une capsule rechargeable 19, dans laquelle peut être disposée une cartouche amovible et remplaçable 20 d'un parfum d'ambiance, imprégnant un support 21 enfermé dans la cartouche dont la paroi externe présente des orifices de passage 22, le montage de la cartouche dans sa capsule étant tel que le débit d'air additionnel, sortant du boîtier 14 du mélangeur 13 et acheminé vers la réserve 18 par le conduit d'entrée 16 selon le sens des flèches sur le dessin, traverse nécessairement cette cartouche 20 pour s'imprégner du parfum de celle-ci, avant de s'évacuer hors de la capsule 19 par les orifices de passage 22, et d'être repris par le conduit de raccordement 23, lequel est à son tour raccordé à la partie 10b de la zone creuse 10 du volant 1.

Pour faire varier la fraction du débit d'air additionnel, provenant de l'ensemble de climatisation 7 via le distributeur 2, ainsi forcée à traverser la cartouche de parfum 20 contenue dans la capsule 19, le logement interne 15 du boîtier 14 est agencé pour coopérer avec un tiroir 24, apte à coulisser dans ce logement et qui, dans l'exemple représenté, comporte un perçage transversal 25 d'une part, et à son extrémité terminale une face en biseau 26.

La distance qui sépare ce perçage transversal 25 de la face d'extrémité en biseau 26 sur la hauteur du tiroir coulissant 24, est déterminée par construction de telle sorte que, lorsque cette face est amenée en regard du conduit d'entrée 16 dans la réserve de parfum 18 et ouvre plus ou moins, selon sa position relative dans le boîtier 14, la communication avec ce conduit, le perçage 25 soit décalé vers le haut par rapport au conduit de sortie 17, le tiroir coulissant 24 fermant dans ce cas toute communication par ce conduit 17.

A l'inverse, lorsque le tiroir coulissant 24, déplacé en sens opposé, amène le perçage 25 complètement en regard du conduit de sortie 17, la face d'extrémité en biseau 26 est décalée vers le bas au-delà du conduit d'entrée 16, dont la communication directe avec le tube de renvoi 9 est ainsi empêchée.

Dans ce dernier cas, le débit d'air additionnel qui s'écoule dans le tube de renvoi 9 est entièrement repris par un tube de by-pass 27, relié dans cette situation au conduit de sortie 17 à travers le perçage 25 du tiroir coulissant 24, lequel est alors directement amené en regard de ce tube 27.

Le tiroir coulissant 24 comporte une patte 28, qui le prolonge vers le haut à l'extérieur du boîtier 14, cette patte étant munie d'un pion de manoeuvre 29 en saillie, agencé pour permettre d'exercer sur le tiroir un effort de traction vers le haut, ou inversement de poussée vers le bas.

Dans ce but, le pion 29 est librement monté dans une fente allongée 30, prévue dans un bras 31 d'un levier plat 32, pivotant et formant came, articulé autour d'un axe 33, excentré vis-à-vis du pion 29 et porté par une extension fixe 34, solidaire du boîtier 14.

La partie du levier 32 opposée au bras 31 qui comporte la fente allongée 30 recevant le pion 29, est avantageusement conformée en secteur circulaire 35, dont le centre est confondu avec l'axe 33, de sorte qu'un effort tangentiel exercé sur ce secteur puisse faire pivoter le levier 32 autour de l'axe 33 en permettant au pion 29 de décrire la fente allongée 30 du bras et d'exercer selon le cas, sur le tiroir coulissant 24, une traction ou une poussée le déplaçant dans son logement 15, en jouant ainsi sur les positions relatives de son perçage 25 et de sa face d'extrémité en biseau 26 vis-à-vis des conduits d'entrée et de sortie 16 et 17 du boîtier 14. Avantageusement, pour mieux faciliter, au gré du conducteur notamment, la variation de position angulaire du secteur circulaire 35 par pivotement de celui-ci autour de son axe 33, ce secteur présente sur sa tranche, un profil strié 36, formant molette de commande, sur laquelle s'applique le doigt de l'utilisateur pour la faire tourner dans un sens ou dans l'autre.

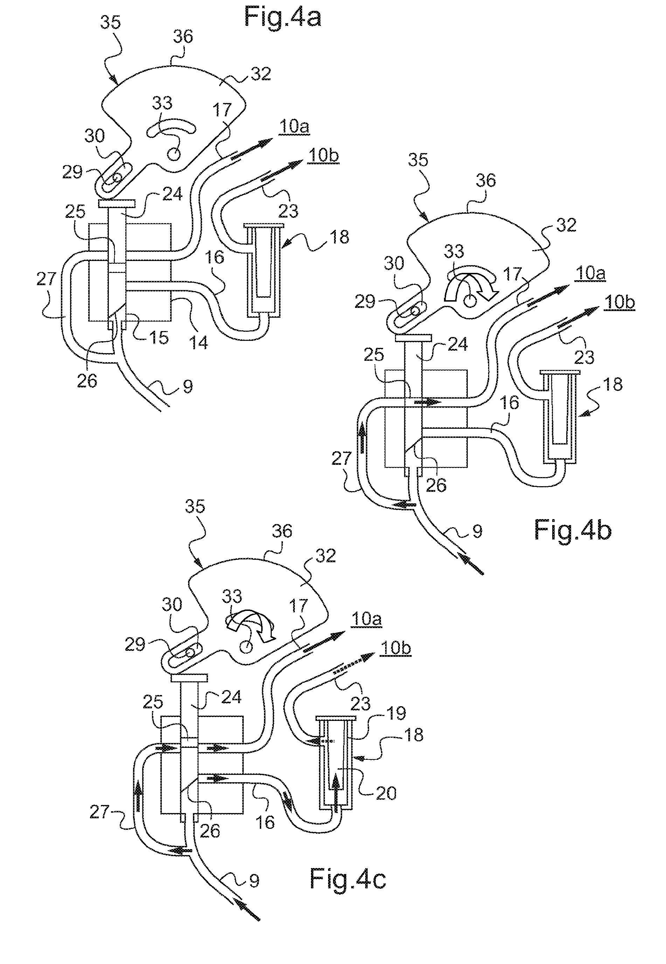

Les Figures 4a à 4c précisent la mise en oeuvre du diffuseur d'air selon l'invention, selon les desiderata du conducteur.

Sur la Figure 4a, le tiroir coulissant 24 est en position basse extrême, le pion de manoeuvre 29 étant amené dans la fente allongée 30 dans la position qui correspond à une rotation maximale du secteur circulaire 35 du levier pivotant 32, commandée par action sur la molette 36, ici dans le sens inverse des aiguilles d'une montre.

Dans cette position, le tiroir 24 ferme aussi bien le conduit d'entrée 16 que le conduit de sortie 17 du mélangeur 13 vers la partie 10a de la zone creuse 10 du volant 1, l'écoulement de l'air additionnel amené par le tube de renvoi 9 à partir du distributeur 2, étant annihilé en totalité, les orifices de sortie 11 du cercle de préhension 12 du volant 1 ne délivrant aucun débit aussi bien d'air que de parfum, vers les mains du conducteur.

Dans la position illustrée sur la Figure 4b, où le pion de manoeuvre 29 est déplacé dans la fente 30 suite à une rotation appropriée mais limitée du secteur circulaire 35, cette fois dans le sens horaire, le tiroir coulissant 24 est déplacé vers le haut dans son logement 15, jusqu'à ce que le perçage 25 soit amené en regard du conduit de sortie 17.

Le débit d'air additionnel peut ainsi traverser en totalité le tiroir 24 avant d'être repris dans ce conduit 17 qui l'achemine vers la partie 10a de la zone creuse 10 du cercle de préhension 11, d'où il est alors expulsé vers l'extérieur et notamment vers les mains du conducteur, par les orifices de sortie 12a.

Dans cette position, la réserve de parfum 18 est inactive, la face d'extrémité en biseau 26 du tiroir 24 étant encore suffisamment décalée vis-à-vis du conduit d'entrée 16 dans la capsule 19 pour interdire qu'une fraction quelconque du débit d'air ne traverse la réserve et notamment la cartouche 20 contenue dans cette capsule.

Dans ce cas en effet, tout le débit d'air délivré au mélangeur 13 par le tube de renvoi 9, relié au distributeur 2, circule dans le tube de by-pass 27 et au-delà, après traversée du tiroir coulissant 24 par le perçage 25, dans le conduit de raccordement 17, qui l'amène au volant 1 de la manière indiquée, en évitant le passage, même d'une fraction réduite de ce débit, dans la réserve 18.

La Figure 4c illustre une position intermédiaire où le perçage 25 du tiroir coulissant 24 est partiellement en regard du conduit 17, pendant que, simultanément, la face en biseau 26 de l'extrémité basse de ce tiroir est de même partiellement disposée devant le conduit 16.

Dans ce cas, le mélangeur 13 permet d'autoriser, en même temps que le passage à travers le tiroir 24 par le perçage 25 d'une fraction du débit d'air additionnel, admis depuis le distributeur 2 par le tube de renvoi 9 et recueilli ensuite dans le conduit de raccordement 17 pour être acheminé par celui-ci dans la partie 10a de la zone creuse 10 dans le cercle 11 du volant 1 d'où elle s'échappe par les orifices 12a, l'autre fraction de ce débit qui passe sous la face en biseau 26 et au-delà dans le conduit d'entrée 16 de la réserve de parfum 18, traversant alors la cartouche 20 logée dans la capsule 19 et se chargeant avec le parfum avant qu'elle ne soit renvoyée à son tour dans la canalisation de raccordement 23 et par la suite, dans la partie 10b de la zone creuse 10, d'où elle s'échappe vers les mains du conducteur cette fois par les orifices 12b.

L'utilisateur peut ainsi, par simple action de pivotement de la molette striée 36 du secteur circulaire 35 dans le sens adéquat, faire varier et gérer autant que désiré, les proportions d'air parfumé ou non parfumé, amenées dans l'une et l'autre des deux parties 10a et 10b de la zone creuse 10 du cercle de préhension 11 du volant 1 et renvoyées à l'extérieur par les orifices 12a et 12b respectivement, notamment entre des situations extrêmes où, soit aucun passage d'air et de parfum n'est autorisé, soit l'air est en totalité imprégné par le parfum, et toute position intermédiaire, où les fractions relatives d'air pur et d'air parfumé respectivement peuvent être modulées à volonté, par ajustement de la position du tiroir coulissant dans le logement interne du boîtier.

La Figure 5 illustre en vue extérieure le volant 1, dont le cercle de préhension 11 comporte les orifices de sortie 12a et 12b pour l'échappement de l'air, parfumé ou non, amené dans le volant de façon différencié, respectivement par l'un et par l'autre des conduits de raccordement 17 et 23, comme précisé précédemment en référence au schéma de la Figure 2.

Sur cette Figure 5, on a représenté le bras transversal 37 qui solidarise la colonne de direction avec le volant 1, et transmet à celle-ci les mouvements de rotation du cercle de préhension 11 pour la manoeuvre du véhicule.

Sur ce bras 37, on a avantageusement prévu une ouverture 38, par laquelle apparaît le profil strié 36 de la molette de commande, permettant le réglage du mélangeur 13 et l'ajustement des fractions du débit d'air pur et d'air parfumé admis dans les parties 10a et 10b, distinctes et séparées de la zone creuse 10 du volant en provenance du tube de renvoi 9, cette molette étant de ce fait immédiatement accessible au conducteur qui peut au doigt en modifier facilement la position pour agir sur ce débit et régler l'importance de la diffusion du parfum effectuée.

Selon l'invention, les deux parties 10a et 10b de la zone creuse 10 ménagée dans le cercle de préhension 11 du volant 1 sont entièrement indépendantes l'une de l'autre, la première 10a, qui comporte les orifices 12a, recevant par le conduit 17 au-delà du passage 25 du tiroir coulissant 24 du mélangeur réglable 13, la fraction du débit d'air additionnel directement acheminée à travers le distributeur 2 par le tube de renvoi 9, sans passer par la réserve de parfum 18.

La seconde 10b reçoit la fraction restante du débit d'air, ajustée selon la position du tiroir 24 dans son logement 25, ce débit complémentaire passant par le conduit 16 d'entrée dans la réserve de parfum 18 en proportions à tout moment réglables par la molette 36, avant d'être ensuite délivré à l'extérieur du volant 1 par les orifices 12b en communication avec cette partie 10b, séparée de la partie 10a.

On réalise ainsi un diffuseur d'air présentant une grande efficacité et procurant au conducteur, au niveau de ses mains qui tiennent le volant, un confort accru, aussi bien en période estivale qu'hivernale.

Bien entendu, il va de soi que l'invention ne se limite pas au seul exemple de réalisation décrit ci-dessus en référence aux dessins annexés ; elle en embrasse au contraire toutes les variantes.

## Revendications

1. - Diffuseur pour délivrer de façon différenciée un débit d'air additionnel dans l'habitacle d'un véhicule automobile par l'intermédiaire du volant (1) de conduite de celui-ci, comportant un distributeur creux (2), de forme cylindrique, constitué d'une couronne circulaire fixe (3) coaxiale à la colonne de direction (5) de ce véhicule, et d'une couronne mobile (4), montée libre en rotation sur cette couronne fixe et solidarisée du volant qui entraîne la colonne de direction, et une canalisation de liaison (8) entre un ensemble de climatisation (7) fournissant un débit d'air principal, chaud ou froid, à l'intérieur de l'habitacle, cette canalisation prélevant le débit d'air additionnel pour l'admettre dans le distributeur (2) à travers la couronne fixe (3), ce débit additionnel étant repris par un tube de renvoi (9), réuni au distributeur à travers la couronne mobile (4), l'air admis dans ce tube étant délivré dans une zone creuse (10) ménagée à l'intérieur du volant (1) et évacué hors de celle-ci par une pluralité d'orifices (12) de sortie vers l'extérieur, en liaison avec la zone creuse et de préférence régulièrement ménagés dans le cercle de préhension (11) qui forme la périphérie de ce volant, **caractérisé en ce que** les orifices de sortie (12) sont individualisés, une partie (12a) de ces orifices étant réservée à la délivrance d'air pur provenant de l'ensemble de climatisation (7) via un mélangeur réglable (13) et l'autre partie (12b) à la délivrance d'air éventuellement parfumé via ce mélangeur et une réserve de parfum (18), ces orifices (12a,12b) étant respectivement en communication avec deux parties indépendantes et séparées (10a,10b) de la zone creuse (10), alimentées par deux conduits de raccordement distincts avec les sorties du mélangeur réglable (13) et de la réserve de parfum (18) respectivement.

2. - Diffuseur selon la revendication 1,
**caractérisé en ce que** le distributeur (2) et la réserve de parfum (18) sont reliés à travers le mélangeur réglable (13) apte à répartir le débit d'air additionnel délivré par le tube de renvoi (9), de telle sorte qu'une fraction variable et ajustable de ce débit traverse la réserve de parfum pour s'en imprégner avant admission dans le volant (1).

3. - Diffuseur selon la revendication 2,
**caractérisé en ce que** le mélangeur réglable (13) comporte un bâti fixe (14), muni d'un orifice d'admission du débit d'air additionnel provenant de l'ensemble de climatisation par le tube de renvoi (9), un logement interne (15) réuni par deux conduits de communication distincts (16,17), respectivement avec l'entrée de la réserve de parfum (18) et directement avec une des parties (10a) de la zone creuse du volant, un tube de by-pass (27) monté entre le tube de renvoi (9) et le conduit de raccordement (23) relié à la sortie du mélangeur réglable (18), et un tiroir (24), coulissant à l'intérieur du logement interne, muni de perçages transversaux ou équivalents (25,26), dont la position avec la position du tiroir permet d'ouvrir ou de fermer de manière ajustable les deux conduits de communication pour la traversée de la réserve de parfum par la fraction variable du débit d'air additionnel à imprégner.

4. - Diffuseur selon la revendication 3,
**caractérisé en ce que** le tiroir coulissant (24) du mélangeur (13) comporte, à l'extérieur du bâti fixe (14), un pion de manoeuvre (29), propre à provoquer le déplacement de ce tiroir dans le logement interne (15) et agir sur la position relative des perçages transversaux (25,26) en regard des conduits de communication (16,17).

5. - Diffuseur selon l'une des revendications 3 ou 4, **caractérisé en ce que** le pion de manoeuvre (29) coopère avec un levier (32) formant came, monté pivotant par rapport au bâti fixe (14) du mélangeur (13) autour d'un axe de rotation excentré (33), la commande de position du levier pivotant (32) provoquant le déplacement du pion (29) et par suite du tiroir coulissant (24) dans le logement interne (15) du mélangeur.

6. - Diffuseur selon la revendication 5,
**caractérisé en ce que** le levier (32) formant came comporte un profil extérieur en forme de secteur circulaire (35) autour de l'axe de rotation (33), de telle sorte qu'un effort tangentiel exercé sur ce profil permette de faire pivoter le levier autour de cet axe en provoquant le déplacement du tiroir coulissant (24) dans le logement interne (15) du mélangeur (13) par l'intermédiaire du pion (29), libre de glisser dans une fente allongée (30) prévue sur le levier.

7. - Diffuseur selon la revendication 6,
**caractérisé en ce que** le profil extérieur en forme de secteur circulaire (35) du levier formant came (32) est strié pour constituer une molette de commande (36), apte à être actionnée dans un sens ou dans l'autre, par le doigt du conducteur.

8. - Diffuseur selon la revendication 7,
**caractérisé en ce que** la molette de commande (36) est logée dans une ouverture (38) ménagée dans un bras diamétral (37) réunissant la colonne de direction (5) au cercle de préhension (11) du volant (1).
